# EUROPEAN PATENT APPLICATION

(11) **EP 4 300 402 A1**
(43) Date of publication of application: **03.01.2024**
(21) Application number: 22780937.3
(22) Date of filing: 29.03.2022
(51) Int. Cl.: G06Q 30/06

(54) **INFORMATION PROCESSING DEVICE**

(30) Priority: 02.04.2021 JP 2021063369
(71) Applicant: Suuta Inc., Tokyo 106-6134 (JP)
(72) Inventor: IMAFUKU Yosuke, Tokyo 106-6134 (JP)
(74) Representative: Ström & Gulliksson AB
(86) International application number: PCT/JP2022/015501
(87) International publication number: WO 2022/210726

(57) **Abstract**

The present invention addresses the problem of making it possible to perform safe transactions between one or more individuals wishing to lend objects and one or more individuals wishing to borrow the objects while securing credibility. A management server 1 supports the transaction of an exhibited object between a lending user UL and a borrowing user UB. A transaction management unit 201 of the management server 1 records and manages, as lending and borrowing information in a block chain B, information including the characteristics of an exhibited object, the owner of the exhibited object, and the transaction history of the exhibited object. Before the transaction of the exhibited object is performed between the lending user UL and the borrowing user UB, a transaction control unit 202 of the management server 1 determines whether or not the transaction of the exhibited object is permissible by using aforementioned rental information recorded and managed in the block chain B by the transaction management unit 201. In this manner, the above-described problem is solved.

## Description

### TECHNICAL FIELD

The present invention relates to an information processing device.

### BACKGROUND ART

In recent years, times are changing from an era where people buy items to an era where people borrow items. As a service for lending and borrowing items, there is a service called a Business to Consumer (BtoC) service, that is, a service where a company lends a rental item to an ordinary consumer. However, no such service where individuals lend and borrow rental items to and from individuals has been achieved. Furthermore, there has already been provided conventionally a system for attaining matching between two individuals (see Patent Document 1) and various types of services for performing Consumer to Consumer (CtoC) electronic commerce trading (for example, Mercari and Yahoo! Auctions (or Yahoo-Auc in short, for example)). However, such systems and services are limited to sell and buy items. Note that Mercari and Yahoo! Auctions are registered trade marks.

### Citation List

### Patent Document

Patent Document 1: Japanese Unexamined Patent Application, Publication No. 2015-129983

### DISCLOSURE OF THE INVENTION

### Problems to be Solved by the Invention

However, conventional technologies do not include lending of rental items that are subject to CtoC electronic commerce trading. That is, in a service of lending a rental item, there is a transaction that completes when the lent item is returned safely. In a transaction between individuals, however, it is difficult to secure credibility of both a person lending an item and a person borrowing the item. This difficulty prevents the service from being widely used.

In view of the situations described above, an object of the present invention is to make it possible to perform safe transactions of items between one or more individuals wishing to lend the items and one or more individuals wishing to borrow the items while securing credibility.

### Means for Solving the Problems

To achieve the object described above, an information processing device according to an aspect of the present invention is
an information processing device that supports, between a first user wishing to lend a predetermined item and a second user wishing to borrow the predetermined item, a transaction of the predetermined item, the information processing device including:
management unit of recording and managing, as rental information, in a block chain or a distributed ledger, information including characteristics of the predetermined item, an owner of the predetermined item, and transaction history of the predetermined item; and
information control unit of executing, before the transaction of the predetermined item is performed between the first user and the second user, control of checking whether or not the transaction of the predetermined item is permissible by using the rental information recorded and managed in the block chain or the distributed ledger by the management unit.

### Effects of the Invention

According to the present invention, it is possible to perform safe transactions of items between one or more individuals wishing to lend the items and one or more individuals wishing to borrow the items while securing credibility.

### BRIEF DESCRIPTION OF THE DRAWINGS

FIG. 1 is a view illustrating an outline configuration of an information processing system including a management server according to an embodiment of an information processing device of the present invention;
FIG. 2 is a conceptual view illustrating basic flows of the present service;
FIG. 3 is a conceptual view illustrating a flow of a fee paid by a borrow applicant in the present service;
FIG. 4 is a block diagram illustrating a hardware configuration of the management server in FIG. 1;
FIG. 5 is a functional block diagram illustrating an example of a functional configuration of the management server in FIG. 4;
FIG. 6 is a view illustrating an example case of making a borrow application via a graphical user interface (GUI) displayed on each of lender terminals and borrower terminals;
FIG. 7 is a view illustrating a specific example of a screen displayed on each of the lender terminals and the borrower terminals, when a button indicating a "Fashion" category among categories displayed in FIG. 6 has been pressed;
FIG. 8 is a view illustrating a specific example of a screen displayed on each of the lender terminals and the borrower terminals, when a button displayed in FIG. 7 has been pressed;
FIG. 9 is a view illustrating a specific example of a screen displayed on each of the lender terminals and the borrower terminals, when a button displayed in FIG. 8 has been pressed;
FIG. 10 is a view illustrating a specific example of My Page displayed on each of the lender terminals and the borrower terminals; and
FIG. 11 is a view illustrating a specific example of an operational screen when an operation for a new offer is performed.

### PREFERRED MODE FOR CARRYING OUT THE INVENTION

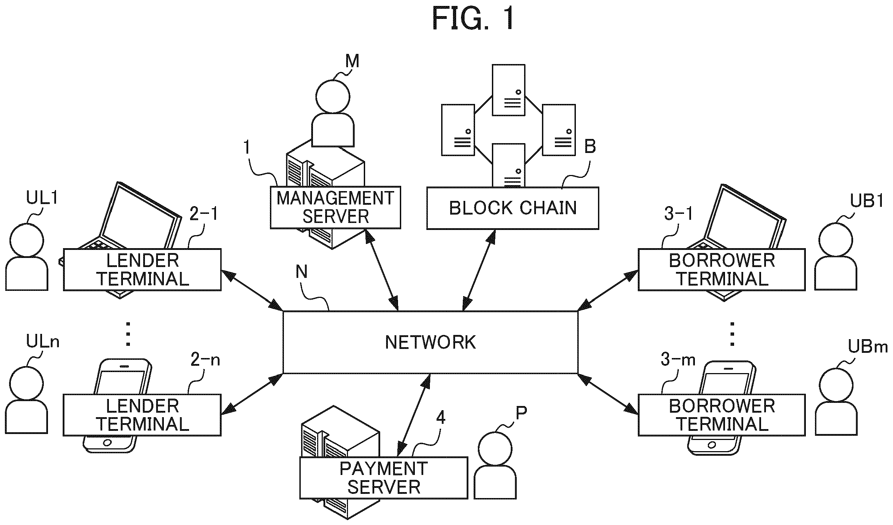

An embodiment of the present invention will now be described herein with reference to the accompanying drawings. FIG. 1 is a view illustrating an outline configuration of an information processing system including a management server 1 according to an embodiment of an information processing device of the present invention.

The information processing system illustrated in FIG. 1 includes the management server 1, lender terminals 2-1 to 2-n (n is a desired integer value equal to or more than 1), borrower terminals 3-1 to 3-m (m is a desired integer value equal to or more than 1), a payment server 4, and a block chain B, all of which are communicably coupled to each other via a predetermined network N such as the Internet.

The management server 1 is an information processing device managed by a service provider M providing a CtoC rental service (hereinafter referred to as "the present service"). Specifically, the management server 1 provides a service through which a CtoC rental site is opened on the Internet to allow member users who have undergone member registration to lend and borrow items. The management server 1 executes various processing to manage operations of the lender terminals 2-1 to 2-n and the borrower terminals 3-1 to 3-m.

The lender terminals 2-1 to 2-n are information processing devices, such as personal computers, smart phones, and tablets, respectively operated by users (hereinafter referred to as "lending users") UL1 to ULn who wish to lend items.

The borrower terminals 3-1 to 3-m are information processing devices, such as personal computers, smart phones, and tablets, respectively operated by users (hereinafter referred to as "borrowing users") UB1 to UBm who wish to borrow items. Note that, unless otherwise specifically distinguished from each other, the lending users UL1 to ULn, the lender terminals 2-1 to 2-n, the borrowing users UB1 to UBm, and the borrower terminals 3-1 to 3-m will be hereinafter respectively and collectively referred to as "lending users UL", "lender terminals 2", "borrowing users UB", and "borrower terminals 3".

The payment server 4 is an information processing device managed by a payment service provider P providing payment services, and performs payment processing based on payment information generated by the management server 1.

In an environment where a plurality of computers forming a distributed network are combined with an encryption technology, the block chain B causes pieces of data such as transaction information to be synchronized with each other and records the synchronized pieces of data. In a case of the block chain B, pieces of transaction data acquired in a certain period of time are gathered with each other in a unit of block, the computers together evaluate the pieces of transaction data, and correct records are coupled to each other to form a chain, for example, and are accumulated. Characteristics of the block chain B make it possible to select, even if a piece of transaction data is falsified in one of the computers, a correct piece of transaction data by majority of the other ones of the computers, preventing records from being falsified, and preventing unauthorized transactions from being performed. In the block chain B, units of data called blocks are generated, and the units are coupled to each other in a chronological order to form a chain, for example, to serve as a database. Each block has a hash value (a value calculated using a hash function) of a previous block coupled to the block. By tracing back the hash values, it is possible to know how the blocks are coupled to each other. When there has been an attempt of falsifying a piece of information in a block generated in the past, which is managed in the block chain B, a hash value calculated from the block in which there is a change differs from the hash value of the previous block, resulting in that hash values in all the subsequent blocks need to be changed. However, it is difficult to change hash values in all the subsequent blocks in fact. Therefore, there is taken a falsification prevention measure.

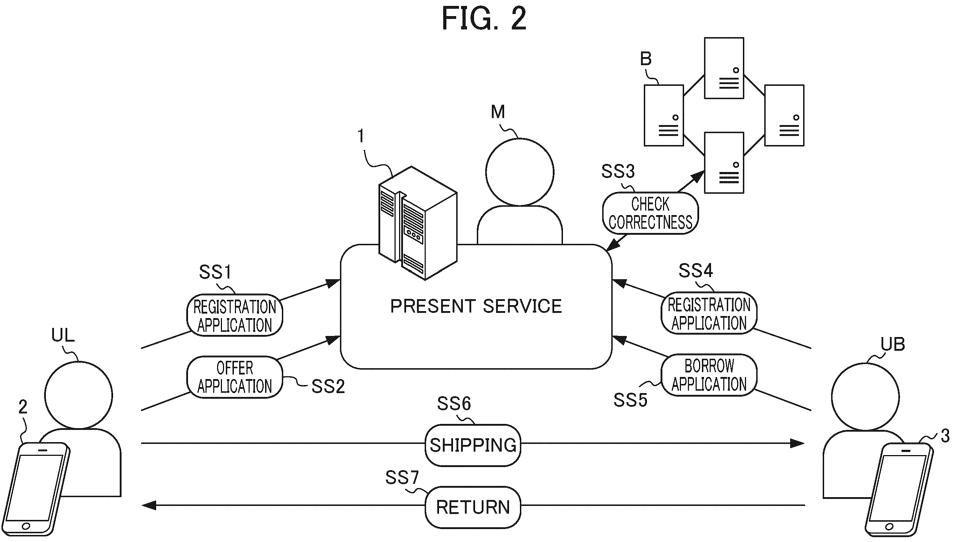

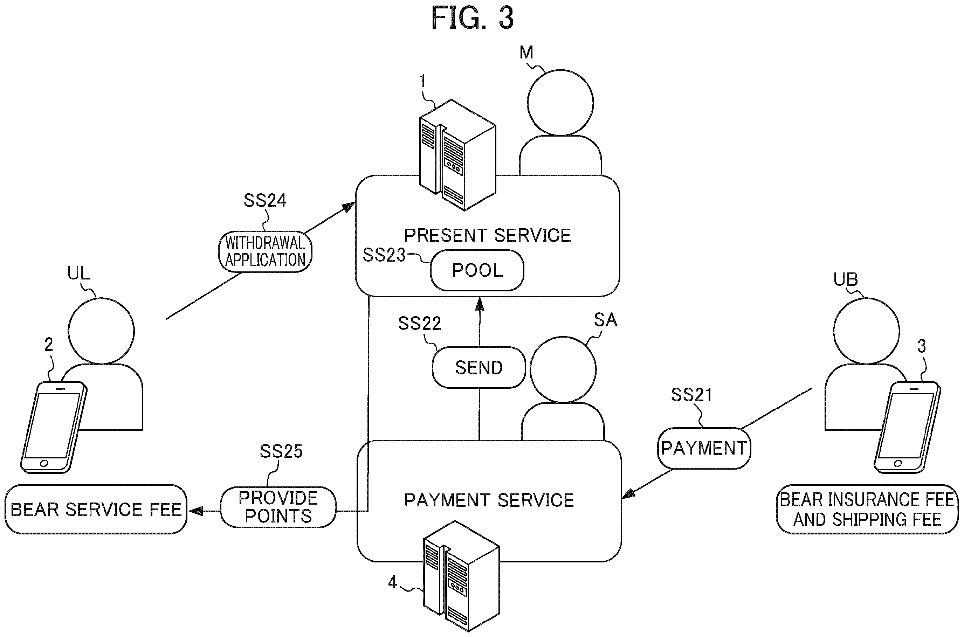

Next, with reference to FIGs. 2 and 3, flows of the present service, which various processing executed by the management server 1 according to the embodiment of the information processing device of the present invention is able to achieve, will now be described herein. FIG. 2 is a conceptual view illustrating basic flows of the present service. Note that FIG. 2, and FIG. 3 described later, both of which describe one of the lending users UL and one of the borrowing users UB, respectively, illustrate simplified cases to describe the flows of the present service in an easily understandable manner. In reality, there may be a plurality of the lending users UL and a plurality of the borrowing users UB in the present service.

At step SS1, to receive the provision of the present service, the lending user UL operates the lender terminal 2 to apply, to the service provider M, user registration to the present service. As the service provider M receives the application from the lending user UL, the service provider M registers individual information of the lending user UL in the block chain B, and notifies, to the lending user UL, that the registration has been completed. At step SS2, the lending user UL operates the lender terminal 2 to register, to the service provider M of the present service, information regarding an offered item to be lent (hereinafter referred to as "offer information"). As the service provider M receives the application of the offer information, the service provider M requests, at step SS3, the block chain B to confirm whether or not registration information of the individual information of the applicant, i.e., the lending user UL, is correct. In a case where it is confirmed that the information of the applicant is correct, the service provider M registers the offer information of the lending user UL in the block chain B. Upon registration of the offer information, the item is treated as an "offered item" that is "offered" in the present service. The lending user UL who has offered the offered item is then treated as an "offeror". Note herein that contents of offer information to be registered in the present service are not particularly limited. It is possible to register, as offer information, desired information regarding an offered item. Specifically, for example, it is possible that offer information includes text information including a name, a type, characteristics, a size, a weight, a purchase price, a desired rental fee, a rental period, and whether or not it is sellable for an offered item, and image information based on a captured image of the offered item. Note that items treated as offered items in the present service are not particularly limited, as long as the items are intended to be rented. Specifically, for example, garments, camping gear such as tents, golf clubs, fishing gear, suitcases, gaming devices, tablets and personal computers, office automation (OA) equipment, wristwatches, land, spaces, houses, furniture articles, fixtures and fittings, vehicles, motorcycles, books, compact discs (CD) and records, cameras, shoes, accessories, bags, special tools, and nursery items such as baby carriages may all be offered for rental.

At Step SS4, to receive the provision of the present service, the borrowing user UB operates the borrower terminal 3 to apply user registration to the present service. As the service provider M receives the application of the user registration, the service provider M registers individual information of the borrowing user UB in the block chain B, and returns a result of registration to the borrowing user UB, similar to the case of the lending user UL described above. Note herein that the lending user UL having undergone the user registration at Step SS1 and the borrowing user UB having undergone the user registration at Step SS3 are not differentiated from each other in any particular way, but are both registered as users who receive the provision of the present service. Therefore, it is possible that the lending user UL receives services for the borrowing users UB and the borrowing user UB receives services for the lending users UL. That is, upon user registration to the present service, a user is allowed to participate as a user who lends an item and to participate as a user who borrows an item.

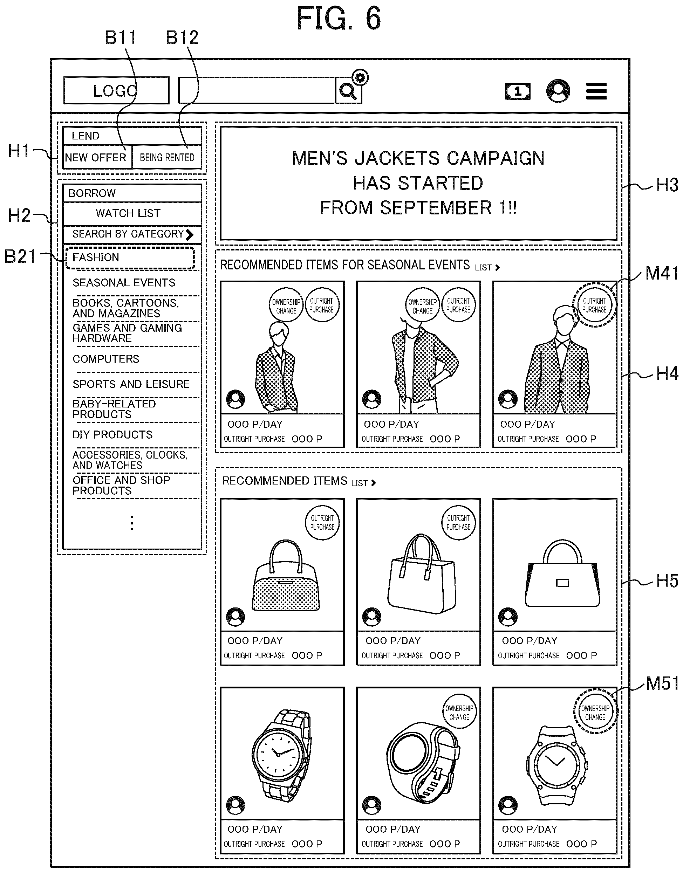

At Step SS5, the borrowing user UB makes, when there is an item that the borrowing user UB himself or herself wishes to borrow, among offered items offered in the present service, an application for borrowing the offered item (hereinafter referred to as a "borrow application"). Furthermore, the borrowing user UB makes an insurance application as required. Note that, in the present service, the borrowing user UB who has made a borrow application for an offered item is also referred to as a "borrow applicant". On the borrower terminal 3, one or more offered items are displayed, together with their offer information. When there is an item that the borrowing user UB himself or herself wishes to borrow, among the one or more offered items displayed on the borrower terminal 3, the borrowing user UB operates the borrower terminal 3 to make a borrow application for the offered item. Note that a specific example of an operation of making a borrow application will be described later with reference to FIGs. 6 to 8.

When it is indicated that the borrowing user UB is allowed to borrow the offered item as a result of making the borrow application, the borrowing user UB who has made the borrow application makes a payment at the desired rental fee included in the offer information. Note that a flow of payment will be described later with reference to FIG. 3.

At Step SS6, the lending user UL sends the offered item to the borrowing user UB who has made the borrow application. The borrowing user UB having received the offered item compares the actual item of the offered item that has been sent with the captured image of the offered item, which is included in the offer information. In a case where there are no discrepancies, the borrowing user UB then starts to utilize the offered item. Specifically, when the offered item has been delivered to the borrowing user UB, the borrowing user UB having received the offered item visually compares the captured image of the offered item, which is included in the offer information provided by the lending user UL, with the actual item. In a case where there are no discrepancies between the captured image and the actual item as a result of the visual comparison by the borrowing user UB, or in a case where there is a discrepancy, but the discrepancy is regarded as acceptable, the borrowing user UB then operates the borrower terminal 3 to send, to the management server 1, information indicating the start of the rental. Specifically, for example, although not illustrated, pressing an "Approve" button or a "Start rental" button displayed on the borrower terminal 3 sends the information indicating the start of the rental to the management server 1. The management server 1 then receives the information, accepting that the borrowing user UB has approved the start of the rental. On the other hand, in a case where there is a discrepancy that is regarded as unacceptable as a result of the comparison of the actual item of the offered item that has been sent with the captured image, the borrow applicant defers (i.e., does not start) the utilization of the offered item. In this case, for example, the borrow applicant does not press the "Approve" button or the "Start rental" button displayed on the borrower terminal 3, but returns the offered item to the sender. Furthermore, for example, under a system environment where a refund after the completion of the payment processing is permitted, the borrow applicant is able to negotiate with the offeror via the present service to receive a refund of part of the rental fee to start the rental or to receive a refund of all the rental fee to cancel the rental. Such a negotiation as described above may be directly performed between users by utilizing a communication tool provided in the present service or may be indirectly performed via the service provider M.

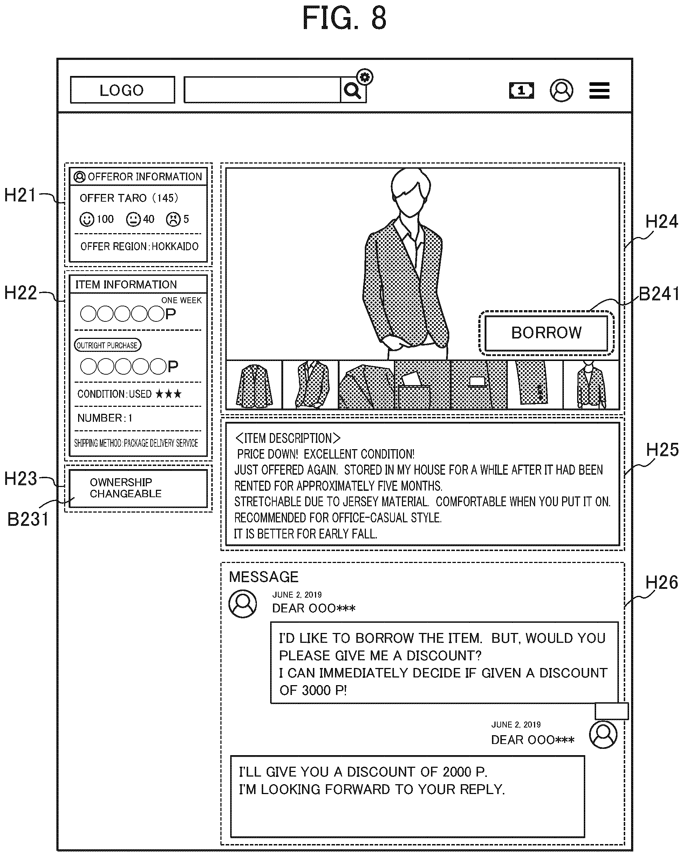

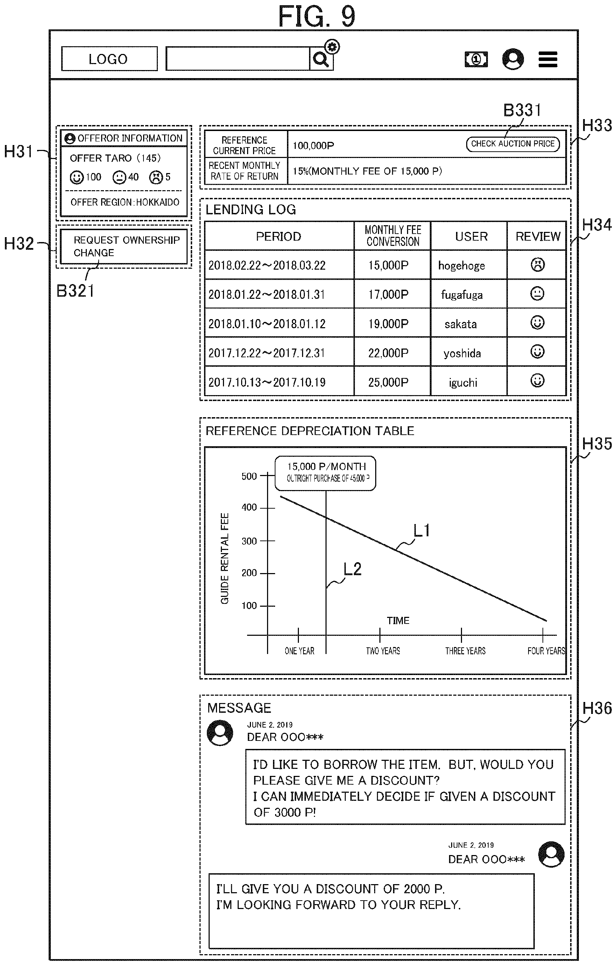

At Step SS7, the borrowing user UB returns the offered item to the offeror of the offered item by an expiration date of the rental period. When the offered item is returned to the lending user UL, the lending user UL compares the actual item of the offered item that has been returned with the captured image of the offered item, which is included in the offer information. In a case where there are no discrepancies, the present service is completed. Note herein that, when there is a discrepancy that is regarded as unacceptable as a result of the comparison of the actual item of the offered item that has been returned with the captured image, the offeror is able to negotiate with the borrow applicant via the present service to take measures as described below, for example. That is, the offeror can either charge the borrow applicant a fee in addition to the rental fee which has already been paid or have the borrow applicant buy the offered item. Such a negotiation as described above may be directly performed between users by utilizing the communication tool provided in the present service (FIGs. 8 and 9) or may be indirectly performed via the service provider M.

FIG. 3 is a conceptual view illustrating a flow of a fee paid by a borrow applicant in the present service.

At Step SS21, the borrowing user UB makes a payment of the rental fee as the borrow applicant. Specifically, the borrowing user UB operates the borrower terminal 3 to request, to a payment service provider SA, for performing payment processing of the rental fee. Furthermore, when the borrowing user UB bears an insurance fee and a shipping fee, the borrowing user UB requests the payment service provider P to process payment of the rental fee, the insurance fee, and the shipping fee (hereinafter referred to as "rental and other fees").

The payment service provider SA who has performed the payment processing of the rental and other fees based on the request from the borrowing user UB remits, at Step SS22, to the present service provider M, points corresponding to an amount of money acquired by subtracting a predetermined commission fee from the payment amount (hereinafter referred to as a "sales amount"). At Step SS23, the present service provider M pools the remitted points corresponding to the sales amount.

At Step SS24, the lending user UL who is the offeror is able to cash some points among the points corresponding to the sales amount pooled in the present service provider M at a certain rate and withdraw an amount of cash that is equal to or less than an amount of money acquired by subtracting the fee of the present service from the sales amount. Specifically, the lending user UL who is the offeror operates the lender terminal 2 to make an application to cash and withdraw points corresponding to an amount of cash that is equal to or less than an amount of money acquired by subtracting the fee of the present service from the sales amount (hereinafter referred to as a "withdrawal application").

At Step SS25, the present service provider M performs provision processing of points or paying-in processing for the amount of cash, for example, based on a content of the withdrawal application from the lending user UL who is the offeror. Specifically, the present service provider M performs provision processing of points or paying-in processing of the amount of cash via the payment service based on the content of the withdrawal application from the lending user UL who is the offeror. Note that, points may not be provided via a payment service, but points may be directly provided from points that the present service provider M pools.

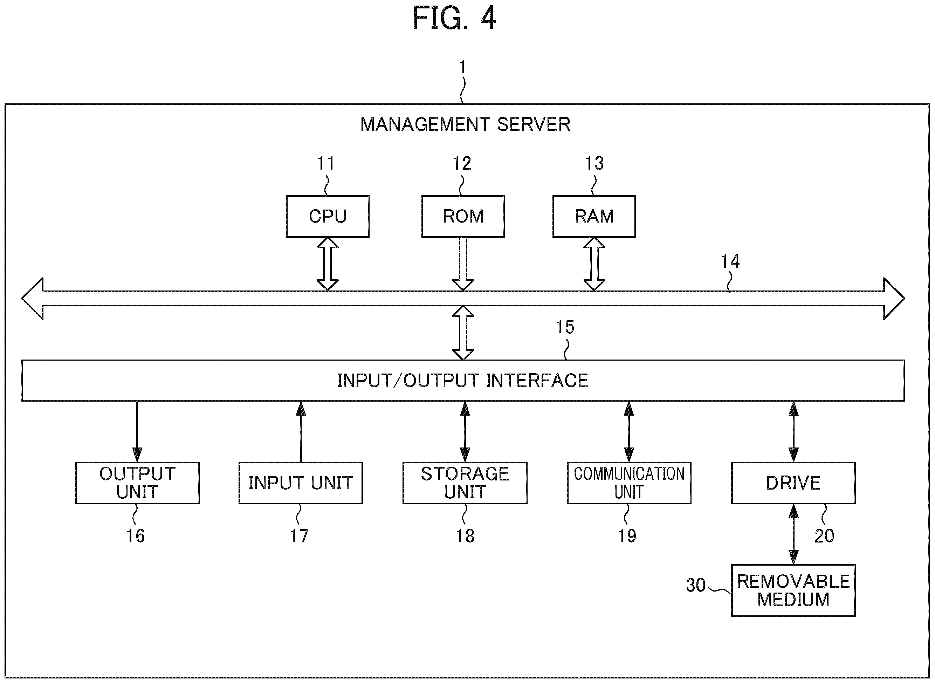

Next, a hardware configuration of the management server 1 that executes various processing to provide the present service will now be described herein. FIG. 4 is a block diagram illustrating the hardware configuration of the management server 1 in FIG. 1.

The management server 1 includes a central processing unit (CPU) 11, a read only memory (ROM) 12, a random access memory (RAM) 13, a bus 14, an input/output interface 15, an output unit 16, an input unit 17, a storage unit 18, a communication unit 19, and a drive 20.

The CPU 11 executes programs recorded in the ROM 12 or programs loaded from the storage unit 18 to the R_AM 13, and, in accordance with the programs, executes various types of processing. The R_AM 13 appropriately stores, for example, data necessary for the CPU 11 to execute various types of processing.

The CPU 11, the ROM 12, and the RAM 13 are coupled to each other via the bus 14. The bus 14 is further coupled to the input/output interface 15. The input/output interface 15 is coupled to the output unit 16, the input unit 17, the storage unit 18, the communication unit 19, and the drive 20.

The output unit 16 is formed of a liquid crystal display of any type, for example, to output various types of information. The input unit 17 is formed of hardware of any type, for example, to accept various types of information. The storage unit 18 is formed of a dynamic random access memory (DRAM), for example, to store various types of data. The communication unit 19 controls communications that take place among other devices (for example, the lender terminals 2-1 to 2-n, the borrower terminals 3-1 to 3-m, and the payment server 4 in FIG. 1) via the network N including the Internet.

The drive 20 is provided as required. The drive 20 is appropriately attached with a removable medium 30 such as a magnetic disk, an optical disk, a magnetic optical disk, or a semiconductor memory. A program read from the removable medium 30 by the drive 20 is installed into the storage unit 18 as required. Furthermore, the removable medium 30 is able to store various types of data stored in the storage unit 18, similar to the storage unit 18.

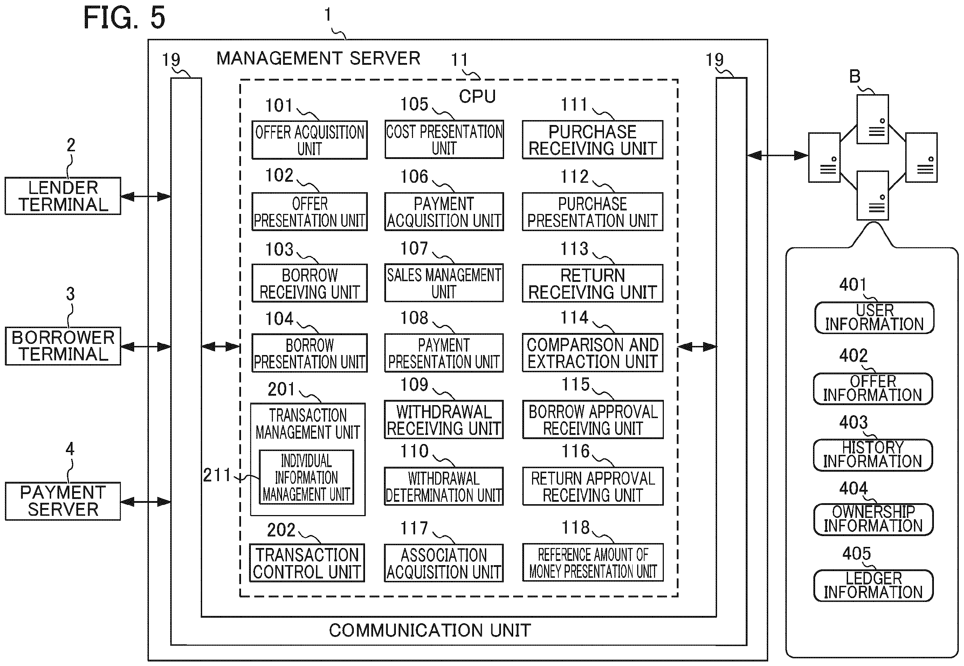

Next, a functional configuration of the management server 1 will now be described with reference to FIG. 5. FIG. 5 is a functional block diagram illustrating an example of the functional configuration of the management server illustrated in FIG. 4.

As illustrated in FIG. 5, when matching processing is executed in the CPU 11 of the management server 1, an offer acquisition unit 101, an offer presentation unit 102, a borrow receiving unit 103, and a borrow presentation unit 104 function. When sales management processing is executed, a cost presentation unit 105, a payment acquisition unit 106, a sales management unit 107, a payment presentation unit 108, a withdrawal receiving unit 109, and a withdrawal determination unit 110 function. Furthermore, when ownership change processing is executed in the CPU 11 of the management server 1, a purchase receiving unit 111 and a purchase presentation unit 112 function. When image diagnosis processing is executed, a return receiving unit 113, a comparison and extraction unit 114, a borrow approval receiving unit 115, and a return approval receiving unit 116 function. When guide price proposition processing is executed in the CPU 11 in the management server 1, an association acquisition unit 117 and a reference amount of money presentation unit 118 function. Furthermore, transaction-relating processing for an offered item is executed in the CPU 11 of the management server 1, a transaction management unit 201 and a transaction control unit 202 function.

The matching processing refers to processing of allowing each of the lending users UL1 to ULn to be matched with each of the borrowing users UB1 to UBm.

The sales management processing refers to processing of managing a rental fee to be paid by each of the borrowing users UB1 to UBm as a sales amount for each of lending users UL1 to ULn.

The ownership change processing refers to processing of changing a right of receiving a rental fee of an offered item, together with an ownership right of the offered item, without changing a rental period. A destination to which an ownership right is changed is either the service provider M or the borrowing user UB. The ownership change processing refers to processing that is executable only when the lending user UL expresses an intention of selling an item when the lending user UL offers the item. Note that a specific aspect of the ownership change processing will be described later with reference to FIGs. 6 to 10.

The image diagnosis processing refers to processing of comparing with each other captured images of an offered item, which are respectively captured at timings when the offered item is offered and the offered item is returned, and of extracting a point of difference. Therefore, it is possible to diagnose a change in form (for example, condition, pattern, or color) of an offered item during a rental period. Note herein that a specific method of comparing captured images with each other is not particularly limited. For example, it is possible to adopt a desired method, such as a method of capturing images of an offered item at an identical distance and an identical angle at timings when the offered item is offered and the offered item is returned, of causing the images to overlap with each other, and of extracting a point of difference, and a method of extracting predetermined feature amounts from captured images, and of comparing the extracted, predetermined feature amounts with each other.

The guide price proposition processing refers to processing of calculating a price serving as a guide to a rental fee to be specified when the item is offered by the lending user UL, and of proposing the price. A specific method of calculating a price serving as a guide to a rental fee is not particularly limited. Specifically, for example, there are cases where a price serving as a guide to a rental fee is calculated based on past trading results regarding an item that the lending user UL is about to offer and where a price serving as a guide to a rental fee is calculated based on an average price of prices at which similar items were bid in the past in various auctions.

The transaction-relating processing for an offered item refers to processing of determining beforehand, before making a transaction such as when a borrow application for the offered item is received and when an application of ownership change is received, whether or not the transaction is permissible, and, in a case where it is determined that the transaction is permissible, of executing the transaction after that. As described above, it is possible to calculate an average price of prices at which similar items were bid in auctions based on trading results of the similar items offered in auctions, for example. Therefore, it is possible to estimate a rental fee linked to a target rate of return, a depreciation rate due to aging, and a rental period, for example, based on this average price.

The offer acquisition unit 101 acquires each piece of information regarding an item, which is provided from each of one or more of the lending users UL. Specifically, the offer acquisition unit 101 acquires each piece of information regarding an item, which is provided from each of the lending users UL1 to ULn registered as member users of the present service. The acquired piece of information regarding the item is sent to the transaction management unit 201, and is registered (stored) and managed as offer information 402 in the block chain B via the transaction management unit 201.

The offer presentation unit 102 presents the offer information 402 registered and managed in the block chain B to the borrowing user(s) UB who is or are one or more second users. Specifically, the offer presentation unit 102 reads the offer information 402 in the block chain B and presents the offer information 402 to the borrowing user(s) UB. Thereby, the borrowing user(s) UB is or are able to view the offered item and its content, and to borrow the offered item.

The borrow receiving unit 103 receives, when there is an application indicating that one of the borrowing users UB wishes to borrow an item, the application as a borrow application. Specifically, the borrow receiving unit 103 receives, when there is an application indicating that one of the borrowing users UB wishes to borrow one of the items offered by the lending users UL, the application as a borrow application.

The borrow presentation unit 104 presents, to a first user, that there has been the borrow application. Specifically, the borrow presentation unit 104 presents, to the lending user UL who is the offeror, that there has been the borrow application from the borrowing user UB.

The cost presentation unit 105 presents a cost required to borrow the item to the borrowing user UB who has made the borrow application. Specifically, the cost presentation unit 105 presents rental and other fees required to borrow the item to the borrowing user UB who has made the borrow application.

Upon completion of the payment of the cost, the payment acquisition unit 106 acquires information indicating that the payment has been completed. Specifically, upon completion of the payment processing of the rental and other fees by the payment server 4, the payment acquisition unit 106 acquires information indicating that the payment processing has been completed. The acquired information indicating that the payment processing has been completed is stored and managed in the offer information 402.

The sales management unit 107 records and manages a predetermined amount of money in the cost as a sales amount. Specifically, the sales management unit 107 records and manages a remaining amount of money acquired by subtracting an amount of money that the payment service provider P should acquire from the rental and other fees as a sales amount.

The payment presentation unit 108 presents, to the lending user UL who is the first user, that the payment has been completed. Specifically, upon the completion of the payment processing by the payment server 4, the payment presentation unit 108 presents the completion of the payment processing to the lending user UL. Note herein that a specific method of presenting, to the lending user UL, that the payment processing has been completed is not particularly limited. For example, the completion of the payment processing may be displayed on the lender terminal 2, or may be notified to the lending user UL via a mail or by using a communication tool such as a social networking service (SNS).

The withdrawal receiving unit 109 receives, in a case where there is an application from one of the one or more lending users UL to withdraw at least part of a sales amount, the application as a withdrawal application. Specifically, when one of the lending users UL wishes to cash a sales amount of an offered item, the one of the lending users UL operates the lender terminal 2 to make a withdrawal application to the service provider M. The withdrawal receiving unit 109 then receives the application as a withdrawal application from the one of the lending users UL.

The withdrawal determination unit 110 determines, based on a content of the withdrawal application, an amount of money that the one of the one or more lending users UL is allowed to withdraw from the sales amount. Specifically, the withdrawal determination unit 110 determines, based on the content of the withdrawal application from the lending user UL, an amount of money that the lending user UL is allowed to withdraw from the sales amount. The amount of money that the lending user UL is allowed to withdraw from the sales amount is equal to an amount of money acquired by subtracting a service fee that the lending user UL should bear from the sales amount.

The purchase receiving unit 111 receives, in a case where there is an application to buy the item from the borrowing user UB who has been borrowing the offered item, the application as a purchase application. There may be a case where the borrowing user UB who has been borrowing an offered item being rented thinks that he or she wishes to buy the offered item. As described above, the offer information provided from the lending user UL when the item is offered includes information regarding whether or not the offered item is sellable. Therefore, when there is the intention of selling the offered item, the borrowing user UB who has been borrowing the offered item is able to make a purchase application. Specifically, when there is a purchase application for the offered item from the borrowing user UB who has been borrowing the offered item, the purchase receiving unit 111 receives the purchase application.

The purchase presentation unit 112 presents, to the lending user UL, that there has been the purchase application. Specifically, the purchase presentation unit 112 presents, when there has been the purchase application from the borrowing user UB, that there has been the purchase application to the lending user UL. Note herein that a specific method of presenting, to the lending user UL, that there has been a purchase application from the borrowing user UB is not particularly limited. For example, the fact that there has been the purchase application may be displayed on the lender terminal 2, or may be notified to the lending user UL via a mail or by using a communication tool such as an SNS.

The return receiving unit 113 receives, when a borrow period of an item expires, return information at least including a captured image of the item when the borrow period has expired. The borrowing user UB operates the borrower terminal 3 upon the expiration of the rental period for the offered item to capture an image of the offered item, and to send, to the management server 1, information at least including image information based on the captured image (hereinafter referred to as "return information"). The return receiving unit 113 then receives the return information that has been sent.

The comparison and extraction unit 114 compares the captured image included in the offer information with the captured image included in the return information, and extracts a difference point. As described above, the offer information includes the captured image of the offered item. The comparison and extraction unit 114 compares the captured image included in the offer information with the captured image included in the return information sent from the borrower terminal 3, and extracts a difference point.

The borrow approval receiving unit 115 receives a difference in condition between the offered item when the borrowing user UB has actually received the offered item and the offered item displayed on the captured image included in the offer information, when the borrowing user UB who has borrowed the offered item has made an approval. In a case where the offered item has been delivered to the borrowing user UB, the borrowing user UB having received the offered item visually compares the captured image of the offered item, which is included in the offer information provided by the lending user UL, with the actual item. In a case where there are no discrepancies between the captured image and the actual item as a result of the visual comparison by the borrowing user UB, or in a case where there is a discrepancy, but the discrepancy is regarded as acceptable, the borrowing user UB then operates the borrower terminal 3, as described above, to send, to the management server 1, information indicating the start of the rental. Specifically, for example, although not illustrated, pressing the "Approve" button or the "Start rental" button displayed on the borrower terminal 3 sends the information indicating the start of the rental to the management server 1. The management server 1 then receives the information, accepting that the borrowing user UB has approved the start of the rental. Therefore, it is possible to prevent the lending users UL from committing an act of dishonesty, such as use of a captured image of a new item and use of a captured image of an item, where scratches and other abnormalities are hidden through image processing, as a captured image of an offered item included in offer information.

The return approval receiving unit 116 receives a difference in condition between the item when the item has been actually returned to the lending user UL and the item displayed on the captured image included in the return information, when the lending user UL who has lent the item has made an approval. When the offered item has been returned to the lending user UL, the lending user UL having received the offered item visually compares the captured image of the offered item, which is included in the return information provided by the borrowing user UB, with the actual item. In a case where there are no discrepancies between the captured image and the actual item as a result of the visual comparison by the lending user UL, or in a case where there is a discrepancy, but the discrepancy is regarded as acceptable, the lending user UL then operates the lender terminal 2 to send, to the management server 1, information indicating that the return of the item has been successfully completed. Specifically, for example, although not illustrated, pressing the "Approve" button or a "Return completed" button displayed on the lender terminal 2 sends information indicating that the return has been successfully completed to the management server 1. The management server 1 then receives the information, accepting that the lending user UL has approved the return. Therefore, it is possible to prevent the borrowing users UB from committing an act of dishonesty, such as use of a captured image included in offer information and use of a captured image of an item, where scratches and other abnormalities left during a rental period are hidden through image processing, as a captured image of an offered item included in return information.

The association acquisition unit 117 acquires trading results of other items associated with an item. Specifically, the association acquisition unit 117 acquires trading results in auctions, for example, of other items associated with the offered item.

The reference amount of money presentation unit 118 presents a price range within which a cost of the item falls, based on the acquired trading results. Specifically, the reference amount of money presentation unit 118 presents a price range within which a rental fee of the offered item falls, based on the trading results, which are acquired by the association acquisition unit 117, in auctions, for example, of the other items associated with the offered item. The lending user UL is thus able to check a reference price when determining a rental fee of the offered item.

The transaction management unit 201 records and manages, as rental information or transaction information, in the block chain B, information including characteristics of an offered item (a predetermined item) offered in the rental site, an actual owner who owns the offered item, and transaction history of the offered item. Specifically, the transaction management unit 201 stores and manages the offer information 402, history information 403, ownership information 404, and ledger information 405, for example, as rental information regarding transactions of the offered item in the block chain B in the network N serving as an external network, for example. The transaction information refers to information adopted in a case where a transaction other than a rental-purpose transaction takes place (for example, when a lease price of the offered item is determined through an auction). In addition to these pieces of information, user information 401 is further recorded and managed in the block chain B, for example. The characteristics of an offered item (a predetermined item) are stored as the offer information 402, for example, representing information of a shape, a year of production, a size, a brand name, a color, design, and condition, for example, for identifying the offered item. The condition includes, for example, appearance of the offered item, a degree of use, a degree of damage, a degree of malfunction, repair history, and capability. The transaction history of the offered item is stored as the history information 403, for example. The history information 403 refers to information in which one who has lent the offered item previously (a lending user UL), one who has borrowed the offered item (a borrowing user UB), a date, a period, a fee, ownership change information, and information indicating the previous transaction where the offered item was leased or purchased, for example, are associated with each other. By referring to the history information 403, it is possible to know a content including a user who lent the offered item, a user who borrowed the offered item, a lending fee, a period during which the offered item was lent, a date on which the offered item was returned, a price of ownership change, and a price at which the offered item was purchased, for example. The actual owner who owns the offered item is stored as the ownership information 404, for example, including information of the owner (individual information including a name, an address, and contact information), for example. The information of the owner is associated with each offered item and stored. The ledger information 405 stores history of transition of the offer information 402, the history information 403, and the ownership information 404 described above. It is information including previous ownership of the offered item, current ownership, who was previously in possession of the offered item itself, who is currently in possession of the offered item itself, a date and a place an accessory of the offered item was lost, a date when the offered item was lent, and a date when the offered item was returned, for example.

The transaction management unit 201 includes an individual information management unit 211. The individual information management unit 211 records and manages information regarding individuals who, respectively, are the lending users UL and the borrowing users UB in the block chain B. The information regarding individuals who, respectively, are the lending users UL and the borrowing users UB includes, for example, credit information about the borrowing users UB (the offerors) in the auctions where a rental item is offered and reviews of the borrowing users UB from the lending users UL after the rental item was lent (for example, reviews that they were reliable).

The transaction control unit 202 controls, when a transaction of an offered item takes place between a lending user UL and a borrowing user UB, the transaction of the offered item by using the rental information recorded and managed in the block chain B. Specifically, as the borrow receiving unit 103 receives a borrow application for a predetermined offered item from a borrower terminal 3 (before a transaction takes place), the transaction control unit 202 sends, to the block chain B, an inquiry relating to the individual information of the borrowing user UB included in the borrow application and the transaction history, determines that, when non-matching is returned for the inquiry, the transaction of the offered item is not permissible, and presents that the borrow application for the predetermined offered item is rejected to the borrower terminal 3 via the borrow presentation unit 104. Furthermore, when matching of the information is attained as a result of the inquiry for the individual information and the transaction history, the transaction control unit 202 determines that the transaction of the offered item is permissible to continue, grants the borrow application for the predetermined offered item, and causes a current screen for the transaction of the offered item to transition to a next screen.

In addition to this control, the transaction control unit 202 may control the transaction of the offered item by using the rental information and the user information (the individual information) managed in the block chain B at a predetermined timing after the transaction of the offered item has been concluded between the lending user UL and the borrowing user UB.

In the block chain B, information regarding users having undergone user registration to the present service (the lending users UL and the borrowing users UB) (hereinafter referred to as the "user information 401") is stored and managed. The user information includes information uniquely identifying the users having undergone user registration to the present service (for example, identification information) and information including their names, addresses, contact information, ownership change history, and reviews by other users. Such history information as described below may be integrated with the user information 401, and the integrated information may be managed.

Furthermore, in the block chain B, information regarding the offered items offered in the present service (characteristics, rental prices, and others of the offered items) is stored and managed as the offer information 402. Specifically, in a case where an offered item is a decorative accessory, for example, clothes, bags, clocks, and watches, for example, are included. In a case where a type of cloth is jacket, for example, the characteristics of the offered item include a product identification number of the jacket, a brand, a model number in a manufacturer, a size, a color, design, a material, and condition, for example. In a case where it is a bag, a product identification number of the bag, a model number in a manufacturer, a size, a color, a material, and condition, for example, are included. The rental price refers to a price per day, such as a price when it is borrowed for a day. In addition, the price may be one of a weekly price, a monthly price, and a yearly price.

Furthermore, in the block chain B, history of transactions (lending and borrowing) of the offered items (for example, offer history and lend history) is stored as the history information 403. Specifically, information of a user who borrowed the offered item, a date when the offered item was borrowed, a date when the offered item was returned, excess hours and days of rental (for example, exceeded days from the scheduled return date) and a rental price, for example, are stored as the history information 403 in association with the product identification number of the offered item.

By allowing the block chain B to manage the history information 403, it is possible to acquire such effects as described below. In a case where a lending user UL has used the site of the present service and has lent an offered item such as a ball-point pen to a borrowing user UB, for example, such information that the lending user UL has lent the ball-point pen to the borrowing user UB is recorded in the block chain B, and such information that the borrowing user UB is in possession of the ball-point pen is recorded. Therefore, by viewing the information in the block chain B, all the users are able to know the user who owns the ball-point pen.

Even in a case where an ownership change for the ball-point pen has taken place from the lending user UL to the borrowing user UB, and when another buyer buys the ball-point pen from the borrowing user UB, the buyer is able to know that the lending user UL owned the ball-point pen before the borrowing user UB owns the ball-point pen. The buyer is thus able to know that the ball-point pen, which was originally owned by another user, is offered by the current owner. When lending and borrowing an item, knowing such a fact leads to a sense of security and reliability.

Furthermore, in the block chain B, information of an actual owner of an offered item (individual information including a name and an address, for example) is associated with product identification information of the offered item and stored. Specifically, the ownership information also represents the individual information including the name and the address, for example. In addition, in the ownership information, information of a fact that a user having the right to receive a rental fee of the offered item is regarded as the owner (information in which a name of an owner and a date when he or she has become the owner are associated with each other) is stored. In a case where the ownership change takes place, the ownership information is also changed.

In the block chain B, the ledger information 405 is stored. Specifically, as the ledger information 405, the offer information 402, the history information 403, and the ownership information 404 pertaining to an offered item are included, and its current condition and points that have been provided as a lease fee each time of a transaction of the offered item are associated with the product identification number of the offered item and stored in a chronological order. The current condition of the offered item is represented by a condition flag corresponding to the product identification number of the offered item (a flag indicating "0" when "being rented" and "1" when "in stock", for example). Furthermore, in a case where a rental price of an offered item is OOOO points (hereinafter referred to as "P"), for example, a lease fee of a rental item of OOOO P is associated with the product identification number of the offered item and stored as the ledger information.

By allowing the block chain B to manage the ledger information 405, it is possible to acquire such effects as described below. It is possible to know transition of an item (a flow and history), including, for example, a user by which, a year and a month when, and a shop from which a ball-point pen was first bought, years the user held the ball-point pen from that point in time, and a user who bought or borrowed the ball-point pen after that. Furthermore, even in a case where an ownership change takes place, the ledger information 405 records a time when, a user by which, and a lease fee at which an item was lent, for example. Therefore, even an item, such as an art item or a bottle of liquor, that was held or used, or even touched, by a famous person, may become valuable and be traded at a higher price.

Next, specific examples of operations to offer an item or to make a borrow application will now be described herein with reference to FIGs. 6 to 11. FIG. 6 is a view illustrating an example case of making a borrow application via a GUI displayed on each of the lender terminals 2 and the borrower terminals 3.

The screen illustrated in FIG. 6, among screens to be displayed on each of the lender terminals 2 and the borrower terminals 3, is formed to include display regions H1 to H5.

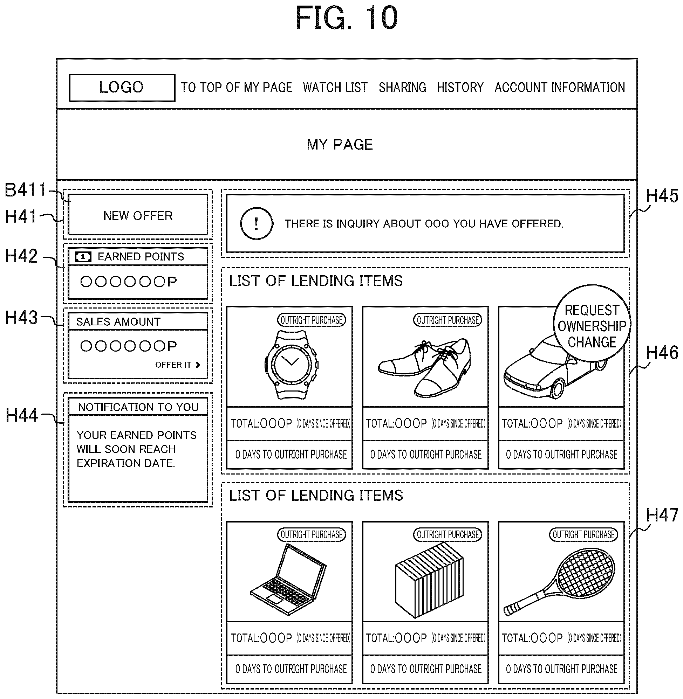

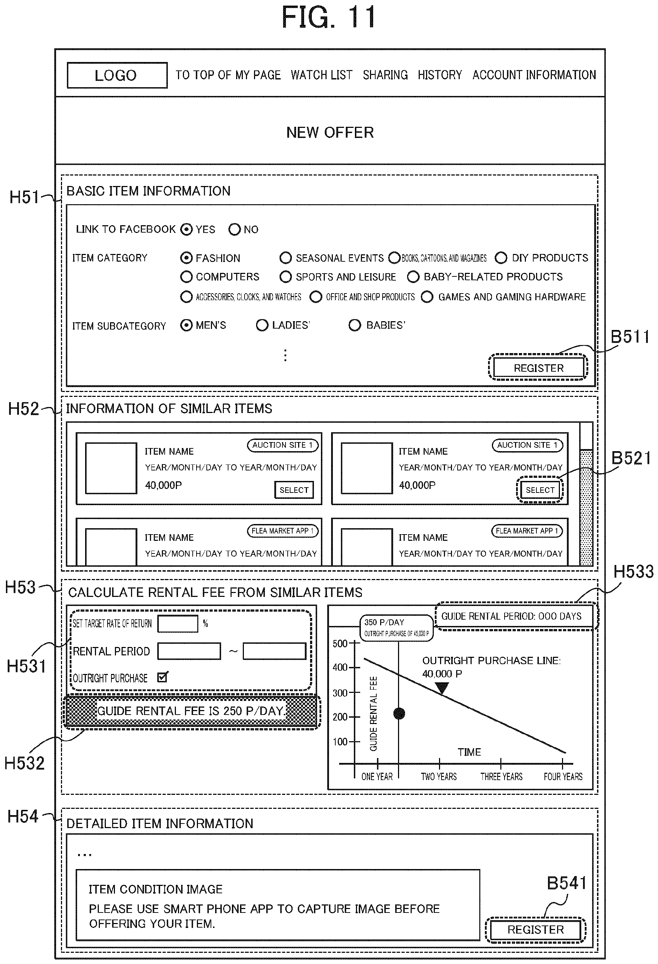

In the display region H1, buttons to be pressed when a user of the present service offers an item as the lending user UL are displayed. Specifically, as illustrated in FIG. 6, a button B11 displayed as "New offer" and a button B12 displayed as "Being rented" are displayed. Note herein that when the button B11 displayed as "New offer" is pressed, the screen transitions to a screen illustrated in FIG. 11. Note that a specific example of an operation when a user of the present service offers an item as the lending user UL will be described later with reference to FIG. 11. Furthermore, when the button B12 displayed as "Being rented" is pressed, a list of offered items that the user of the present service is lending as the lending user UL is displayed. Specifically, for example, when the button B12 displayed as "Being rented" is pressed, the screen may transition to a screen (My Page) illustrated in FIG. 10 to display the list of lent offered items. Note that a specific example of a list of lent offered items will be described later with reference to FIG. 10.

In the display region H2, buttons to be pressed when a user of the present service borrows an offered item as the borrowing user UB are displayed. Specifically, as illustrated in FIG. 6, a button displayed as "Watch list", a button displayed as "Search by category", and, as various buttons indicating categories, a button B21 displayed as "Fashion", a button displayed as "Seasonal events", and a button displayed as "Books, cartoons, and magazines", for example, are displayed. Note that specific contents of the buttons indicating other categories are as illustrated in the display region H2 in FIG. 6.

In the display region H3, an announcement or an advertisement to the user is displayed. In the example illustrated in FIG. 6, the announcement of "Men's jackets campaign has started from September 1!!" is displayed. It is also possible to press, as a button, an announcement or an advertisement displayed in the display region H3. In this case, when the announcement illustrated in FIG. 6 is pressed, a special screen (not illustrated) indicating a specific content of the announcement may be displayed.

In the display region H4, three captured images of men's jackets are selected, from among the offered items offered by the lending users UL1 to ULn, and displayed as "Recommendations for seasonal events", together with their offer information. Note that the term "item" used herein means an offered item offered by each of the lending users UL.

In the display region H5, three captured images of handbags and three captured images of wristwatches are selected, from among the offered items offered by the lending users UL1 to ULn, and displayed as "Recommendations", together with their offer information. The borrowing users UB are able to see the contents displayed in the display regions H2 to H3 to easily find a desired offered item.

Some of the offered items respectively displayed in the display regions H4 and H5 feature an "Outright purchase" mark M41 or an "Ownership change" mark M51.

The "Outright purchase" mark M41 featured on the offered items means that the respective offer information includes an intention to sell. That is, it means that the lending user UL thinks that the offered item "may be taken over" after a predetermined rental period has expired. Specifically, for example, in a case where an offered item having a worth of 10000 P is lent at a fee of 100 P per day, a total sales rental fee reaches 10000 P when the rental period reaches 100 days. In this case, the lending user UL may take the view that "the base price has been recovered", and that the offered item may be taken over as is by the borrowing user UB. Therefore, in the offer information of the offered items respectively displayed in the display regions H4 and H5 in FIG. 6, outright purchase amounts are displayed in addition to rental fees per day.

Furthermore, the offered items featuring the "ownership change" mark M51 are offered items for which it is possible to change a right of receiving a rental fee of each of the offered items, together with an ownership right of each of the offered items, without changing a rental period. That is, it means that, for each of the offered items, it is possible to change the ownership right of the offered item to the present service provider M or a borrowing user UB, while the right of receiving the rental fee is reserved.

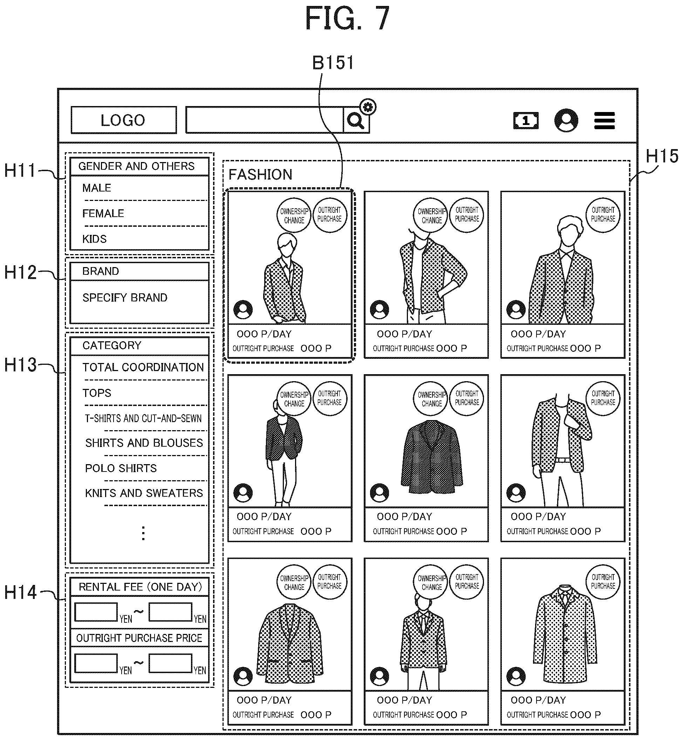

FIG. 7 is a view illustrating a specific example of a screen displayed on each of the lender terminals 2 and the borrower terminals 3, when the button B21 indicating the "Fashion" category, among the categories displayed in the display region H2 in FIG. 6, has been pressed.

The screen illustrated in FIG. 7, among the screens to be displayed on each of the lender terminals 2 and the borrower terminals 3, is formed to include display regions H11 to H15.

In the display regions H11 to H14, buttons and entry fields used to narrow down, with other parameters, the plurality of offered items extracted under the "Fashion" category are displayed. Therefore, the borrowing user UB is able to efficiently find a desired offered item.

In the display region H11, the buttons used to narrow down, with a parameter of Gender and others, the plurality of offered items extracted under the "Fashion" category are displayed. Specifically, there are the button displayed as "Men's" used to narrow down offered items for men, the button displayed as "Women's" used to narrow down offered items for women, and the button displayed as "Kids" used to narrow down offered items for kids.

In the display region H12, the button used to narrow down, with a parameter of brand, the plurality of offered items extracted under the "Fashion" category is displayed. Specifically, the button indicating "Specify brand" is displayed. When the button indicating "Specify brand" is pressed, the screen transitions to a screen used to specify a brand. For example, when the button indicating "Specify brand" is pressed, a pop-up screen listing specific brand names may be displayed.

In the display region H13, the buttons used to narrow down, with a subcategory, the plurality of offered items extracted under the "Fashion" category are displayed. Specifically, the buttons being displayed are the "Total coordination" button used to narrow down the offered items with a subcategory of total coordination and the "Tops" button used to narrow down the offered items with a subcategory of tops, and, further, the "T-shirts and cut-and-sewn" button used to narrow down the offered items with a subcategory of T-shirts and cut-and-sewn that is a subcategory of the subcategory, i.e., a subcategory to tops, the "Shirts and blouses" button used to narrow down the offered items with a subcategory of shirts and blouses, the "Polo shirts" button used to narrow down the offered items with a subcategory of polo shirts, and the "Knits and sweaters" button used to narrow down the offered items with a subcategory of knits and sweaters.

In the display region H14, the price entry fields used to narrow down the plurality of offered items extracted under the "Fashion" category with a rental fee or an outright purchase price per day are displayed. Therefore, the borrowing user UB is able to efficiently find a desired offered item within a budget.

In the display region H15, captured images of the plurality of offered items extracted under the "Fashion" category are displayed, together with their offer information. In a case where the borrowing user UB finds a desired offered item or is interested in an offered item, among the captured images of the plurality of offered items displayed in the display region H15, the borrowing user UB performs an operation of pressing the captured image. For example, when a button B151 indicating one of the offered items is pressed, a screen indicating detailed information of the offered item is displayed. Note that a specific example of the screen displayed when the button B151 is pressed will be described later with reference to FIG. 8.

FIG. 8 is a view illustrating the specific example of the screen displayed on each of the lender terminals 2 and the borrower terminals 3, when the button B151 displayed in the display region H15 in FIG. 7 has been pressed.

The screen illustrated in FIG. 8, among the screens to be displayed on each of the lender terminals 2 and the borrower terminals 3, is formed to include display regions H21 to H26.

In the display region H21, part of user information of the lending user UL who has offered the offered item illustrated in FIG. 8 is displayed as "Offeror information". Specifically, a name (Offer Taro) of the lending user UL as the offeror, a total count (145) of reviews by other users, breakdown of the reviews by other users, and an offer region (Hokkaido) are displayed. In the breakdown of the reviews by other users, among them, a count of reviews rated as "Good" (100), a count of reviews rated as "Average" (40), and a count of reviews rated as "Poor" (5) are displayed. Note herein that the offer region is regarded as important information when one takes into account a shipping fee.

In the display region H22, part of offer information of the offered item is displayed as "Item information". Specifically, a rental fee (OOOOO P) per week, an outright purchase price (OOOOO P), conditions (used: ***), number of items (1), and a shipping method (package delivery service) for the offered item are displayed.

In the display region H23, whether or not an ownership change is available is described. In the example in FIG. 8, it is displayed that an ownership change is available as "Ownership changeable". Note herein that the part displayed as "Ownership changeable" represents a button B231 that is able to be pressed. When the button B231 is pressed, the screen transitions to a screen used to operate an ownership change, as illustrated in FIG. 9. Note that a specific example of the operation of performing an ownership change will be described later with reference to FIG. 9.

In the display region H24, a plurality of captured images of the offered items are displayed. Therefore, the borrowing user UB is able to easily know the condition of the offered item. Furthermore, in the display region H24, a "Borrow" button B241 that is to be pressed when the borrowing user UB makes a borrow application is displayed. The borrowing user UB is able to press the "Borrow" button B241 to make the borrow application.

In the display region H25, the description of the offered item is displayed. Therefore, the borrowing user UB is able to easily acquire the specific information regarding the offered item. In the example illustrated in FIG. 8, as "<Item Description>", "Price down! Excellent condition! Just offered again. Stored in my house for a while after it had been rented for approximately five months. Stretchable due to jersey material. Comfortable when you put it on. Recommended for office-casual style. It is better for early fall.
" is displayed.

In the display region H26, a communication tool used between users is displayed. The communication tool allows users to exchange messages, making it possible to exchange detailed information regarding an offered item and to negotiate its price, for example. As a result, it is possible to achieve smooth trading between the users. Specifically, an inquiry message "I'd like to borrow the item. But, would you please give me a discount? I can immediately decide if given a discount of 3000 P!", from the borrowing user UB to the lending user UL, and a reply message "I'll give you a discount of 2000 P. I'm looking forward to your reply.
", from the lending user UL to the borrowing user UB, are exemplified.

FIG. 9 is a view illustrating a specific example of the screen displayed on each of the lender terminals 2 and the borrower terminals 3, when the button B231 displayed as "Ownership changeable" on the display region H23 in FIG. 8 has been pressed.

The screen illustrated in FIG. 9, among the screens to be displayed on each of the lender terminals 2 and the borrower terminals 3, is formed to include display regions H31 to H36.

In the display region H31, the part of user information of the lending user UL who has offered the offered item illustrated in FIG. 8 is displayed as "Offeror information". Note that, since the content displayed in the display region H31 is identical to the content displayed in the display region H21 in FIG. 8, its description is omitted.

In the display region H32, a button B321 used to request ownership change is displayed. When the button B321 is pressed, the intention of an ownership change is notified to the current owner of the offered item.

In the display region H33, a current rental fee (Monthly fee of 10000 P) is displayed as a "Reference current price" and "15% (Monthly fee of 15000 P)" is displayed as a "Recent monthly rate of return". That is, the rental fee (15000 P) that could be earned through lending in a recent one month and the percentage (15%) of the reference current price (100000 P) that the rental fee represents are displayed. Furthermore, in the display region H33, a button B331 displayed as "Check auction price" is also displayed. When the button B331 is pressed, trading prices of identical or similar offered items offered in other auction sites are displayed. Therefore, a comparison with trading prices in auctions becomes easy.

In the display region H34, information regarding results of past lending is displayed as "Lending log". Therefore, it is possible to view, in a list, periods during which the offered item had been lent and for what rental fees. Furthermore, it is possible to view, in a list, reviews about the borrowing users UB who had borrowed the offered item. Specifically, for example, the recent period when the item was lent is a period of one month from February 22 to March 22, 2018, and the rental fee was 15000 P that is converted into a monthly fee. Note that other contents of the specific example indicated in the lending log are as illustrated in the display region H34 in FIG. 9.

In the display region H35, a graph illustrating a guide rental fee of the offered item is displayed as "Reference depreciation table". Specifically, in a graph region where a vertical axis illustrates a "guide rental fee" and a horizontal axis illustrates a "time", a straight line L1 falling diagonally from top left to bottom right and a straight line L2 orthogonal to the horizontal axis are displayed. The straight line L1 falling diagonally from the top left to the bottom right illustrates the guide rental fee when an outright purchase price for the offered item is 40000 P. The straight line L2 orthogonal to the horizontal axis illustrates conditions to lend the offered item at this time.

In the display region H36, messages exchanged between the users regarding the offered item are displayed. It is also possible to exchange messages regarding an ownership change. Note that, since the content displayed in the display region H31 is identical to the content displayed in the display region H26 in FIG. 8, its description is omitted.

FIG. 10 is a view illustrating a specific example of My Page displayed on each of the lender terminals 2 and the borrower terminals 3.

The screen illustrated in FIG. 10, among the screens to be displayed on each of the lender terminals 2 and the borrower terminals 3, is formed to include display regions H41 to H47.

In the display region H41, a button B411 to be pressed when an item is to be newly offered is displayed as "New offer". When the button B411 is pressed, the screen transitions to a screen used to perform an operation for a new offer. Note that a specific example of performing the operation for the new offer will be described later with reference to FIG. 11.

In the display region H42, points earned by the user are displayed as "Earned points". In the display region H43, a sales amount earned by the user as the lending user UL is displayed as "Sales amount". As described above, it is possible to treat both the "Points" and the "Sales amount" as currencies to be exchanged in the present service. The points, among them, may be added through various campaigns, for example. Furthermore, more points may be added to the borrowing users UB who had borrowed offered items with extreme care without leaving any damage and are thus reviewed as excellent. It is possible to use the points to pay a rental fee. However, the points are set with an expiration date (for example, a half year after the points are earned). It is possible to anytime withdraw the sales amount as an amount of cash, as described above. Furthermore, it is possible to use the sales amount to pay a rental fee. Furthermore, it is possible to change the sales amount to points. Furthermore, a credit card may be used to pay a rental fee, together with the points and the sales amount in a combined manner.

In the display region H44, a notification from the service provider M to the user is displayed as "Notification to you". Specifically, in the example illustrated in FIG. 10, a notification of "Your earned points will soon reach their expiration date." is displayed.

In the display region H45, a trading-related message to the user is displayed. Specifically, in the example illustrated in FIG. 10, a notification of "There is an inquiry about OOO you have offered." is displayed.

In the display region H46, a list of offered items currently being lent to other users (the borrowing users UB) is displayed as "List of lending items". For each of the offered items displayed in the list, points, lending days, and remaining days to outright purchase are displayed. Furthermore, for offered items for which ownership change has been requested, notice to that effect is displayed.

In the display region H47, a list of offered items currently being borrowed from other users (the lending users UL) is displayed as "List of borrowing items". For each of the offered items displayed in the list, points, lending days, and remaining days to outright purchase are displayed.

FIG. 11 is a view illustrating a specific example of the operational screen when the operation for a new offer is performed.

The screen illustrated in FIG. 11, among the screens to be displayed on each of the lender terminals 2, is formed to include display regions H51 to H54.

In the display region H51, fields used to enter basic information about an item to be newly offered are displayed as "Basic item information". Specifically, as the basic information, a field used to select and enter whether or not the item is linked to Facebook (registered trade mark), a field used to select and enter a category for the item, and a field used to select and enter a subcategory for the item, for example, are displayed. When the basic information has been entered, and a button B511 displayed as "Register" is pressed, the basic information is registered. Note that the basic information is not limited to include the items displayed in FIG. 11. It is possible to include various items in the basic information.

In the display region H52, a list indicating offer situations in auctions, for example, of items similar to the item to be newly offered is displayed as "Information of similar items". When a button B521 displayed as "Select" is pressed, among them, information regarding the item is displayed. Therefore, comparisons with prices and contents of items being traded in auctions, for example, become easy.

In the display region H53, a tool for estimating a rental fee of an item to be newly offered at a reasonable level is provided as "Calculate rental fee from similar items". Specifically, in a display region H531 in the display region H53, a field used to enter a target rate of return, a field used to enter a rental period, and a check box used to set whether or not outright purchasing is available are displayed. Furthermore, in a display region H532 in the display region H53, a price (250 P per day) serving as a guide to a rental fee of the item to be newly offered is displayed. Furthermore, in a display region H533 in the display region H53, a period serving as a guide to a rental period of the item to be newly offered is displayed as "Guide rental period", which has been estimated and calculated.

In the display region H54, a field used to enter detailed information about the item to be newly offered is displayed as "Detailed item information". Specifically, the field used to register, as a piece of the detailed information, a captured image of the item to be newly offered is displayed. Note that an item to be entered as a piece of the detailed information is not limited to a captured image described above. It is possible to provide a plurality of items. When the detailed information has been entered, and a button B541 displayed as "Register" is pressed, the detailed information is registered.

Although the embodiment of the present invention has been described, the present invention is not limited to the embodiment described above. The present invention still includes amendments and modifications, for example, that fall within the scope of the present invention, as long as it is possible to achieve the object of the present invention.

For example, the block chain B has been utilized for managing the validity of rental information in the embodiment described above. However, a distributed ledger may be utilized, instead of the block chain B. Any means that can record information including characteristics of a predetermined item, an owner of the owned item, and transaction history of the owned item as rental information to manage the correctness of data, is sufficient.

In the embodiment described above, almost all of the payment processing for those including not only fees of the present service, but also lease fees, insurance fees, and shipping fees of offered items is processed using points. By constructing such a structure whereby items are associated with points and are managed, and points are determined based on a utility value of an item, as described above, it is possible to perform transactions that are similar to barter trading.

In the embodiment described above, an example of transactions between individuals, where a user wishing to lend an offered item is referred to as a lending user UL and a user wishing to borrow the offered item is referred to as a borrowing user UB, has been described. However, users are not limited to such a lending user UL and a borrowing user UB illustrated in the present embodiment. That is, there may be a first user wishing to deliver a predetermined item and a second user wishing to receive the predetermined item. Furthermore, in the embodiment described above, offered items (Western-style clothes, shoes, clocks, watches, and ball-point pens, for example) in the rental site have been exemplified as predetermined items. However, any other items may be offered, as long as the items serve as predetermined items.

In the embodiment described above, an inquiry has been requested from the management server 1 to the block chain B. However, and in addition, the transaction control unit 202 of the management server 1 may access rental information in the block chain B, may read part of the rental information, and may control a transaction based on the information. For example, when a lending user UL registers an offered item in the rental site, the transaction control unit 202 refers to the ledger information 405 in the block chain B to determine whether or not the lending user UL is an actual owner of the offered item. When it is confirmed that the lending user UL is the actual owner of the offered item, the offered item is registered. This feature makes it possible to improve reliability of the rental site.

Furthermore, when a third party member user borrows an offered item offered in the rental site, it is possible that the ledger information 405 in the block chain B is referred to via the management server 1 from a terminal of the third party member user to check whether or not an offeror of the offered item is an actual owner and to check if it is reliable to borrow the offered item from the offeror to make a rental transaction.

A member user who is allowed to refer to information in the block chain B as described above is called a member user who is different from a normal member user, i.e., is called a premium member, for example. A user who satisfies a certain condition is only allowed to be a premium member. Examples of the certain condition are that no charge is required to be a normal member user, while a charge is required to be a paid member user, and that a member user has concluded a contract to pay a higher member fee than that a normal member user pays. Premium members may be ranked. In accordance with the ranking, a level of accessible information in the block chain B or a search-permitted range may be changed. A premium member may be allowed to view the history of ownership change for an offered item pertaining to the ownership information 404, for example. At this time, a disclosure range may be selectable for ownership information.

As one of services for a premium member, not only the right to view information in the block chain B is provided, but also an average price or a market price, for example, of an offered item that the premium member has designated, which is acquired from a lease fee search site, for example, available on the Internet may be presented, for example.

Furthermore, allowing a premium member to view the history of rental activities and transactions in the past, in particular, the rental and trading prices of the offered item that the premium member has designated allows the premium member to know the market price, allowing the premium member to negotiate with the lending user UL who is the lender of the offered item.

Furthermore, by referring to the ownership information 404 in the block chain B, it is possible to execute those described below. For example, a person X owns an offered item from the year XX to the year XY. A person Y previously owned the offered item. There is owner's ownership history where the ownership right of the offered item is transferred from a previous owner, i.e., a person Z, to the person Y, and the person Y owned the offered item until the year XX. Such history is recorded as information of an actual owner of an item in the ownership information 404. In the rental site of the present service, users are unable to make transactions such as borrowing and selling items unless always referring to the ownership information 404 in the block chain B via the management server 1. By doing so, information about an actual owner of an offered item is secured. Even when a user requests an owner of an offered item to borrow the offered item, for example, the user knows that there is information indicating that another user is borrowing the offered item when the other user is borrowing the offered item or another user is in possession of the offered item, for example, the user thus knows that he or she needs to wait until the day when the offered item is returned. When a user who is in possession of an offered item behaves as a lender, but the truth is that the actual owner is another user, and the actual owner has been lending the offered item to the user, it is known that the user is inevitably not the owner, and it is not possible to borrow the offered item from the user who is in possession of the offered item.

In other words, it is possible to use the ownership information 404 in the block chain B as described below. That is, when a user A possesses an ownership right of a rental item to be lent on and at a first date and time, for example, the rental item is lent to a user B. After that, in a state where the rental item is still lent to the user B on and at a second date and time, the ownership right of the rental item is transferred from the user A to a user C. In such a case as described above, the ownership information 404 in the block chain B contains a history to the effect that the user A is the owner from a predetermined date and time, which is before the first date and time, to the second date and time, and the user C is the owner after the second date and time. Thereby, the user C is able to use the ownership information 404 in the block chain B, which describes that the user C is the owner after the second date and time, as a means for perfection against a third party.

Furthermore, although, in the configuration of the embodiment described above, the borrowing user UB is able to make a borrow application for an offered item to borrow the item without problems, the present invention is not limited to such configurations as described above. For example, such a configuration may be applicable where there are a plurality of borrow applicants. In this case, an auction style may be adopted to allow a bidder who won the bid to borrow an offered item. When such an auction style is adopted, factors other than price may be employed as competitive factors to determine the winning bidder. For factors other than price as competitive factors, it is possible to employ, for example, reviews by other users and earned points. Therefore, it is possible to expect an increase in users who wish to utilize the present service with sincere attitudes, making it possible to prevent acts of dishonesty and trouble that may tend to easily occur in CtoC trading.

Furthermore, for example, the embodiment described above has exemplified tangible items as items to be rented. However, the present invention is not limited to such tangible items. For example, intangible human skills and rights may be rented. Furthermore, intangibles may be substituted by tangible items in the form of certificates, for example. For example, a membership of a golf club is treated as a tangible item that substitutes an intangible "right to play golf".

Furthermore, for example, the embodiment described above has introduced the example where a single offered item (for example, a jacket, a handbag, a clock, or a watch) is traded. However, the present invention is not limited to such a case where a single offered item (i.e., an item to be rented) is traded. For example, for a comic consisting of a total of ten volumes, a user who only lacks nine volumes may offer "the first to eighth volumes and the tenth volume of the comic". In this case, if there is a user who only has the ninth volume, the user may make a borrow application or a purchase application for "the first to eighth volumes and the tenth volume of the comic". Furthermore, the user who only has the ninth volume may borrow or buy "the first to eighth volumes and the tenth volume of the comic" to complete the total of ten volumes of the comic, and may lend (so-called sublease) the full set of the comic to another user for a predetermined period.

Furthermore, the condition for disclosing the information recorded in the block chain B to a third party has been fixed in the embodiment described above. However, the present disclosure is not limited to the embodiment. Such a condition may be variable. For example, each piece of various types of information recorded in the block chain B may be added with a flag indicating that the information is disclosed or non-disclosed to a third party per predetermined unit, making it possible to control whether or not to disclose the information to the third party based on this flag. Then, this flag may be switchable between on (disclosed) and off (non-disclosed). Thereby, the flag is normally set to off (non-disclosed) because the information relates to individual information, for example. However, when a predetermined condition is satisfied, such as the individual information is used for the purpose of criminal investigation or when the item to be lent is missing, for example, it is possible to switch the flag for the individual information from off (non-disclosed) to on (disclosed). Furthermore, at the time of credit card or loan screening, for example, it is possible to switch the flag for necessary information serving as information on underlying assets among information recorded in the block chain B from off (non-disclosed) to on (disclosed).

Note herein that it is also possible to store, in the block chain B, points provided in the present service described above and other points provided in other services and organizations, for example, as credit information for credit card or loan screening, for example.

Furthermore, the hardware configuration illustrated in FIG. 3 is a mere example used to achieve the object of the present invention. The present invention is not particularly limited to the hardware configuration illustrated in FIG. 3.

Furthermore, the functional block diagram illustrated in FIG. 5 is a mere example. The present invention is not particularly limited to the functional block diagram illustrated in FIG. 4. That is, it is enough that an information processing system has functions that make it possible to execute the series of processing described above. Functional blocks used to achieve the functions are not particularly limited to the functional blocks illustrated in the example in FIG. 5.

Furthermore, locations at which the functional blocks are present are not limited to the locations in FIG. 5. Desired locations may be selected. Furthermore, a single piece of hardware may configure one functional block. A single piece of software may configure one functional block. A combination of pieces of hardware and software may configure one functional block.

To execute, with software, processing of each functional block, a program configuring the software is installed into a computer from a network or a recording medium, for example. The computer may be such a computer incorporated in special hardware. Furthermore, the computer may be such a computer installed with various programs used to execute various functions, such as, in addition to servers, general-purpose smart phones and personal computers.

A recording medium storing such programs as described above may not only be a removable medium distributed separately from a device main body to provide the programs to each user, but also be a recording medium provided to each user in a state where the recording medium is assembled beforehand in the device main body, for example.

Note that, in the present specification, steps describing programs recorded in a recording medium include not only processes sequentially executed in a chronological order, but also processes that may not necessarily be executed in a chronological order, but may be executed in parallel or separately.

Furthermore, in the present specification, the term system means a generic apparatus including a plurality of devices and a plurality of means, for example.

To summarize those described above, it is enough that the information processing device to which the present invention is applied takes a configuration as described below. The information processing device may still take one of various embodiments. That is, an information processing device (for example, the management server 1) to which the present invention is applied is
an information processing device (for example, the management server 1 illustrated in FIG. 5) that supports, between a first user (for example, a lending user UL) wishing to lend a predetermined item and a second user (for example, a borrowing user UB) wishing to borrow the predetermined item, a transaction of the predetermined item, the information processing device including:
management nit (for example, the transaction management unit 201 illustrated in FIG. 5) of recording and managing, as rental information, in a block chain (for example, the block chain B illustrated in FIG. 5) or a distributed ledger, information including characteristics of the predetermined item (for example, the offered item), an owner of the owned item (for example, the offered item), and transaction history of the owned item (for example, the offered item); and
transaction control unit (for example, the transaction control unit 202 illustrated in FIG. 5) of controlling, before the transaction of the predetermined item (for example, the offered item) is performed between the first user (for example, the lending user UL) and the second user (for example, the borrowing user UB), the transaction of the predetermined item (for example, the offered item) by using the rental information recorded and managed in the block chain B or the distributed ledger by the management unit (for example, the transaction management unit 201 illustrated in FIG. 5). By recording and managing the rental information in the block chain B or the distributed ledger, using the rental information in the block chain B or the distributed ledger, and determining whether or not a transaction of the predetermined item (for example, the offered item) is permissible, as described above, it is possible to perform safe transactions (rental transactions, for example) of items (for example, the offered items) between one or more individuals (for example, lending users UL) wishing to lend the items (for example, the offered items) and one or more individuals (for example, borrowing users UB) wishing to borrow the items (for example, the offered items) while securing credibility.

The management unit (for example, the transaction management unit 201 illustrated in FIG. 5) further includes an individual information management unit (for example, the individual information management unit 211 illustrated in FIG. 5) that records and manages, in the block chain or the distributed ledger, information (for example, credit information of an offeror in an auction of a lease item and review information such as he or she was reliable) regarding individuals who, respectively, are the first user (for example, the lending user UL) and the second user (for example, the borrowing user UB). By managing not only transaction information of a predetermined item (for example, an offered item), but also information (for example, credit information of an offeror in an auction of a lease item and review information from a lender to a borrower such as he or she was reliable) regarding individuals who, respectively, are the first user (for example, the lending user UL) and the second user (for example, the borrowing user UB), as described above, it is possible to secure the credibility of an individual, making it possible to provide a service of further safely achieving a transaction (rental transaction, for example) of a predetermined item (for example, the offered item).

### EXPLANATION OF REFERENCE NUMERALS

1: Management server,
2, 2-1, 2-n: Lender terminal,
3, 3-1, 3-m: Borrower terminal,
4: Payment server,
11: CPU,
18: Storage unit,
19: Communication unit,
101: Offer acquisition unit,
102: Offer presentation unit,
103: Borrow receiving unit,
104: Borrow presentation unit,
105: Cost presentation unit,
106: Payment acquisition unit,
107: Sales management unit,
108: Payment presentation unit,
109: Withdrawal receiving unit,
110: Withdrawal determination unit,
111: Purchase receiving unit,
112: Purchase presentation unit,
113: Return receiving unit,
114: Comparison and extraction unit,
115: Borrow approval receiving unit,
116: Return approval receiving unit,
117: Association acquisition unit,
118: Reference amount of money presentation unit,
201: Transaction management unit,
202: Transaction control unit,
211: Individual information management unit,
401: User information,
402: Offer information,
403: History information,
404: Ownership information,
405: Ledger information,
B: Block chain,
SA: Payment service provider,
M: Present service provider,
N: Network,
UL, UL1, ULn: Lending user,
UB, UB1, UBn: Borrowing user

## Claims

1. An information processing device that supports, between a first user wishing to lend a predetermined item and a second user wishing to borrow the predetermined item, a transaction of the predetermined item, the information processing device comprising:
management unit of recording and managing, as rental information, in a block chain or a distributed ledger, information including characteristics of the predetermined item, an owner of the predetermined item, and transaction history of the predetermined item; and
transaction control unit of controlling, before the transaction of the predetermined item is performed between the first user and the second user, the transaction of the predetermined item by using the rental information recorded and managed in the block chain or the distributed ledger by the management unit.

2. The information processing device according to claim 1, wherein the management unit further includes
an individual information management unit that records and manages, in the block chain or the distributed ledger, information regarding individuals who, respectively, are the first user and the second user.
